# EUROPEAN PATENT APPLICATION

(11) **EP 1 583 012 A1**
(43) Date of publication of application: **05.10.2005**
(21) Application number: 04008078.0
(22) Date of filing: 02.04.2004
(51) Int. Cl.: G06F 17/60, G06F 17/24

(54) **Electronic messaging with an integrated interactive footer**

(71) Applicant: Web. De AG, 76227 Karlsruhe (DE)
(72) Inventor: Greve, Michael, 76227 Karlsruhe (DE); Cotte, Pierre-Alain, 76227 Karlsruhe (DE)
(74) Representative: DTS München

(57) **Abstract**

The present invention provides a messaging system processing messages (100), especially e-mail messages, with an additionally integrated footer (101) for transmission from a sender (104) to a recipient (103), characterized in that the integrated footer (101) comprises contact information (109) about the message recipient (103). The present invention also provides a corresponding method being an effective and subtle way for obtaining updated contact information (109') using footers of e-mail messages (100).

## Description

### Field of the Invention

The invention relates to electronic messaging and to the exchange of information using electronic messaging. More specifically, the invention relates to the updating and/or requesting of contact and address information via e-mail messaging.

### Background of the invention

It is well known that if one wants to communicate over a distance with someone, one needs to have the address or number of the person with whom one wants to communicate. For example, to communicate by telephone one needs the telephone number of the person that one wants reach. If one wants to write an e-mail to somebody one needs the person's e-mail address. Accordingly, people keep contact databases such as address books and the like in which they store said addresses and numbers. These databases have an entry for each contact and each entry contains the information needed to reach the associated contact. However, a problem arises with these contact databases. Indeed, contacts often change addresses. People might for example change their postal address or their telephone number. Consequently, contact entries in databases are often out of date. Therefore there is a need to update a contact database whenever a stored contact changes some or all of its contact information. There are various known ways of keeping contact databases up to date.

A known method of keeping contact databases up to date is aimed at contact databases, which are kept on computer terminals and are integrated with e-mail programs. Contact information is kept up to date by sending update request e-mails to the contacts stored in the database. In this way, each contact receives an e-mail message requesting him or her to update his or her contact details and/or to provide further missing contact information.

The drawback of this known method of updating contact information is that the update request e-mails are rather disturbing to the recipients. Indeed, each such a message takes up storage space in a recipient's mailbox. Furthermore, the recipient might not be willing to directly reply to such an update request e-mail. In the worst case, the recipient might filter those e-mails out or even delete them, especially if he or she receives update request e-mails very often and by many different senders. Of course, if recipients react this way then the sender of the update request e-mails will not get the expected updates. Consequently, with this method contact details will never be completely up to date since there will always be a number of recipients that do not reply to the update request e-mails.

### Object of the invention

Thus, it is an object of the present invention to provide a means to a message sender to convey with the message a request for information in a subtle and discreet and non-disturbing way.

### Short description of the invention

The above named object is achieved by a messaging system processing messages, especially e-mail messages, with an integrated footer for transmission from a sender to a recipient, characterized in that the integrated footer comprises contact information about the message recipient.

The messaging system may run any messaging application or program. The messaging system may be an e-mail messaging system or an MMS messaging system or any other electronic messaging system. In a preferred embodiment, the messaging system runs an e-mailing application, e.g. an internet-based e-mailing application, with an integrated contact database or PC-based e-mail program.

Accordingly, the messages processed by the messaging system may be electronic messages such as e-mail messages or MMS messages.

The invention may run in an communications environment comprising a communications website with contact control means. An environment as such is described in patent application WO 03/094469 A2 which has been filed earlier by the applicant.

The integrated footer may be in the form of a separate section of the message containing supplementary information apart from the actual message. The integrated footer does not have to be a footer in the strict sense of the word but may also be a portion or a window situated somewhere within the message. In an e-mail message, the integrated footer may be a separate, supplementary section at the bottom of the actual message body. The footer may be presented in a window or box, it may also simply be presented as text at the end of the message text that is separated from the main text by e.g. alphanumeric symbols, in particular spaces or blanks.

The contact information within the integrated footer may contain some information that the sender already has about the message recipient. This information may be personal information about the recipient such as his or her birthday, hobbies or the like. It may also be address information about the message recipient. In particular, the footer may contain at least the name and/or e-mail address of the recipient. Other or further information may appear as well. This may be the recipient's phone numbers, fax numbers and/or postal addresses. The information about the message recipient contained in the footer may stem from the sender's contact database. In particular, the information may have been automatically retrieved from the sender's database and integrated into the footer. The set of information to be inserted into the footer may depend on default or presetting which the sender has input into his/her contact database.

Further the footer may contain data fields marked with signs like question marks or other characters or having wildcards or blanks for indicating the wish to have these data fields completed or updated by the recipient. The completed or updated data may be any contact data, such as address, communications data, the date of birth or any other data of interest to enhance the sender's ability to keep close contact to the recipient.

Thus the contact information within the footer may appear with different content depending on the sender's wishes and requests. And the content of the footer may dynamically change according to the sender's needs and desires. This may be automatically performed by the system, e.g. when a message with footer is sent to the recipient's business place the footer may preferably comprise business contact information whereas the footer comprises private contact information if the message is sent to the recipient private address. The content of the footer may also depend from the status of the recipient. This status may be stored in a contact database of the sender and it may indicate the history, in particular times and other events, which indicate how often the sender has had contact to the recipient etc. Thus the footer may be arranged depending on the history status of the recipient.

The recipient of the message with such a footer may instantly complete and/or update the contact information by inputting the requested data when replying the message. Alternatively the recipient will automatically be forwarded to a website which is assigned to the sender. This may be done by integrating into the footer a link to an URL for said website. The recipient who will click that link will be forwarded to the sender's website and then will automatically be logged-on the website where he reaches a webpage. There is presented the individual contact information of the recipient and those data field in which the recipient is invited to input the requested data and/or to check and update the present data. Alternatively the recipient may log-on manually to the website.

In this context the sender is understood to be the owner or host of the communications website whereas the recipient is understood to be the guest or visitor of said website. Thus both parties can be called users of the website.

Another embodiment may be that the footer in message from sender comprises questions to the recipient for asking him/her to input contact data which the sender would like to know.

The sender of the message may be an individual or a group of individuals.

The message recipient is preferably an individual or a group of individuals that the sender wants to reach with the message. However, it may also be a computer system or a software application.

As mentioned above, the contact information about the recipient, which is comprised in the integrated footer, may be editable especially updatable, by the recipient. Accordingly, a recipient may change some or all of the information displayed within the footer by adding new information about himself or by replacing outdated information by up to date information. The recipient of the message may update or add his information within the footer itself or may also do so in a different part of the message or in a new window or application that may be opened from within the message.

In a preferred embodiment of the invention, the contact information that has been updated by the recipient may be returned to the sender of the message. The recipient of the message may initiate this return by pressing an appropriate button integrated within the message footer. However, the contact information may also be returned automatically to the sender.

Thanks to the messaging system according to the invention the recipient of the message is not directly disturbed by an update or information request. Indeed, since the request is not sent as a separate message on its own but rather is added in a subtle way as supplementary information to a normal, individual message, the recipient feels less annoyed. Indeed, the recipient may choose to only read the plain message text contained in the message and to ignore the information contained within the footer. If the supplementary information is routinely integrated into each footer of a message that is sent to the recipient then the recipient does not even have to immediately react to the information in the footer. Rather, he may decide by himself when to react to this information. In particular, he may decide to react to the footer information in a later message from the sender.

Accordingly, the messaging system according to the present invention is a subtle and discreet way of requesting information from a message recipient.

As mentioned earlier on, footer information that has been updated or edited by the recipient may be sent back to the sender of the message. In particular, the recipient may actively return the update to the sender via a reply e-mail. An automatic update may be most easily implemented if the message is an HTML e-mail. In this case, the update of the recipient may be delivered automatically to the sender and the recipient would not even need to actively reply to the sender. The update may even be returned automatically as soon as it has been typed into an appropriate field by the recipient without the need for any confirmation.

The above-mentioned object of the present invention is also fulfilled by a messaging system processing messages with an additionally integrated footer, characterized in that the integrated footer comprises one or several information requests by the sender in order to request contact information from the recipient.

These information requests may be in the form of questions or queries in text form that appear in the integrated footer of the message. These information requests may also appear in the footer on top of the information that the sender already has about the message recipient. In such a way, a sender may combine an update request of already present information with a request for new information about the recipient. The information requests may also be in a different format such as graphics, images, video or audio.

Preferably, in the inventive messaging system the integrated footer further comprises an element by which the recipient can react, in particular initiate a reply, to the sender's contact information request.

The element that is comprised in the footer may be a graphical element, which the recipient may use in order to reply. Particularly, it may be a reply window integrated into the footer allowing the recipient to type in a response and to reply with a reply button or it may only be a reply button, which, upon pushing by the recipient, opens a new window for a reply. The element may also be a button integrated into the footer by which the recipient may initiate a telephone call or an SMS message or an MMS message or a fax message or the like to the sender of the original message.

Preferably, said contact information requests may be address information requests and/or personal and/or private information requests. For example, the sender may ask the recipient for his postal address. The sender may also ask for the name of the recipient's spouse or the name of his children.

The above-mentioned object of the present invention is also achieved by a communications environment comprising the inventive messaging systems with an integrated footer.

The above named object of the invention is also fulfilled by a method for editing or updating information stored in a database of a sender between said first and at least a recipient of a messaging system comprising the steps of embedding sender's information into the footer of a message directed towards the recipient; sending the message including said footer to the recipient; displaying the message with sender's information contained in the footer; prompting the recipient to edit or update the sender's information.

The database of the sender may be a contact database. It may be an electronic database, which is integrated into a messaging system, such as an e-mail system. Preferably, the database may be part of an Internet based e-mail application such as FreeMail™ by the applicant. However, the database may also be part of a client e-mail program (such as e.g. Eudora® or Microsoft Outlook@) or may be integrated into a contact management application. The database may be located on a local workstation or PC or may be situated remotely on a server. The database may contain address and contact information as well as private information about the contacts of the sender.

The user may be any person or party or system to which the database belongs.

The information in the footer of the message directed to the recipient may stem from the database. It may be automatically retrieved from said database and integrated into the message footer without the interference of the sender.

The prompting of the recipient to update the sender's information may be an application actively asking the recipient to update the information such as e.g. a pop up window appearing in a browser. However, it may merely consist in a passive element such as a button or text or other application integrated into the footer that allows the recipient to update the information.

Preferably, the inventive method may further comprise the step of providing for the information being edited or updated by the recipient. The provision may be via an application that is integrated into the message footer. Such an application may be a simple button on which to click in order to edit or update the information. It may also be a hyperlinked text or a highlighted text. It may also be a box or window within the footer into which the user may enter information or text.

In a preferred embodiment of the inventive method a further step may be comprised in that the edited or updated information is returned to the database of said sender. In particular, the updated or edited information may be automatically returned to said sender. On the other hand, the recipient may himself or herself initiate a returning by pressing for example a provided button within the footer.

Preferably, the inventive method further comprises the step of providing for a control or check by said sender of the returned and edited or updated information.

This check or control may consist in a notification of the sender by the messaging system that the recipient has returned edited or updated information. This notification may be in the form of an e-mail message or a footer within an e-mail message but it may also be in the form of a pop up window or the like. The notification may also be initiated by a contact management application controlling the sender's database or by the database itself.

In reaction to this notification the sender then may decide to integrate the edited or updated information into his database or may decide to reject the edited or updated information. Preferably, the edited or updated information may also be integrated into the database of the sender without notification or interference by the sender, i.e. automatically.

Preferably, the information embedded in the footer may be contact information such as address information and/or personal or private information about the recipient.

The afore-mentioned object of the present invention is also achieved by a method for exchanging information between at least a sender and a recipient of a messaging system comprising the steps of embedding a sender's information request into the footer of a message directed towards the recipient; sending the message including said footer to the recipient; displaying the message with the sender's information request contained in the footer; prompting the recipient to reply to the sender's information request.

As mentioned earlier on, the information request may be a question or query of any kind by the sender towards the recipient. In particular, it may be the request to provide personal or private information such as the birthday of the recipient or the like. It may also be any other question or query.

The information request may be in the form of a text message within the footer. However, it may also include images or may be in the form of an audio message that may be listened to within the footer by the recipient.

Preferably, the inventive method further comprises the step of providing for the information request being replied to by the recipient. As described earlier on, this might be done via a text box or a window within the footer of the message into which the recipient might type his reply to the information request. It might also be done by a specific button integrated into the footer.

Preferably, the method further comprises the step of returning the reply of said recipient to said sender.

Furthermore, the method may further accommodate for a step of providing for a control or check by said sender of the reply to his information request.

Finally, the afore-mentioned object of the invention is also achieved by a method for presenting a message recipient with a request for information from a sender's database comprising the steps of detecting a given setting or input within said database and integrating a corresponding information request into an integrated footer of a message directed towards the recipient.

In this case, the information request originates from the sender's database instead of from the sender itself. The database generates such an information request as a result of detecting a certain setting or input within itself. For example, the database may check the contact information that it has stored about the recipient. The database may then realise that it lacks the telephone number of the recipient of the message. In this case, the database would automatically generate a request for the telephone number. This request could be in the form of a short text message and would be automatically integrated into the footer of messages directed towards the recipient.

The database may also integrate such a request into the footer of the message in response to a specific input by the sender. The sender might for example delete a certain contact information from the database. The database would then automatically generate a request for a corresponding new contact information. The sender might for example delete the telephone number of the recipient from his database. The database would then generate a request for a new telephone number and integrate this request into the footer of the next message that is sent by the sender towards the recipient. Of course, the database may also be able to automatically process and integrate any replies by the recipients to its requests.

With such a method in which the sender's contact database automatically manages update and information requests and the resulting replies, the sender may mainly rely on his database for updating information. Accordingly, the sender does no longer need to update and complete his database by himself. Rather, by automatically sending necessary update and information requests within footers of messages sent to the various contacts of the sender the database is automatically kept up to date. In such a way the burden of updating and checking the database is nearly completely removed from the sender or database owner. On the other hand side the recipient will receive these contact information within an e-mail which the sender would have sent to him anyway. Therefore the recipient will no more be bothered with update requests as such.

Preferably, according to the present invention, the messages with an integrated footer are electronic messages such as e-mail messages, HTML e-mail messages or MMS messages.

### Short description of the figures

The accompanying drawings illustrate the preferred embodiments of the present invention and together with the description also explain the principles of the invention.
- Fig. 1a: shows as a first embodiment an e-mail message with an integrated footer that contains sender's information about the recipient according to the present invention;
- Fig. 1b: shows a contact information being stored in a database and being administered via a communications website which is assigned to the sender;
- Fig. 1c: shows the automatic forwarding of the recipient to the sender's communications website and the presentation to the recipient for editing and/or updating contact information.
- Fig. 2a: shows as a second embodiment an e-mail message with an integrated footer, which contains information requests by the sender according to the present invention;
- Fig. 2b: shows a method for sending update requests using an integrated footer according to the present invention;
- Fig. 3a: shows as a third embodiment a method of updating contact information using an integrated footer according to the present invention;
- Fig. 3b: shows a confirmation window issued by a database after the receipt of an update.

### Description of the preferred embodiments

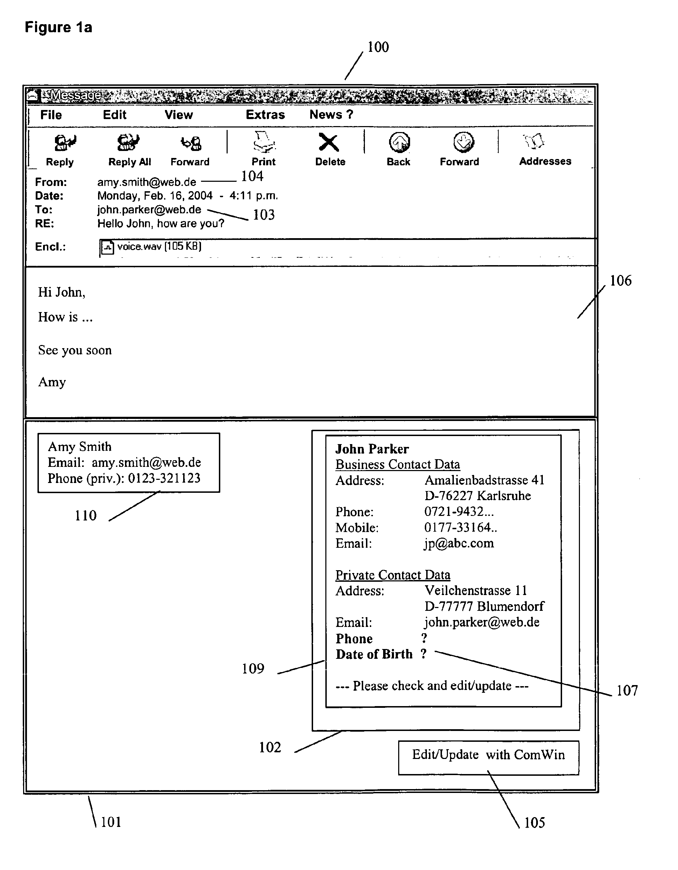

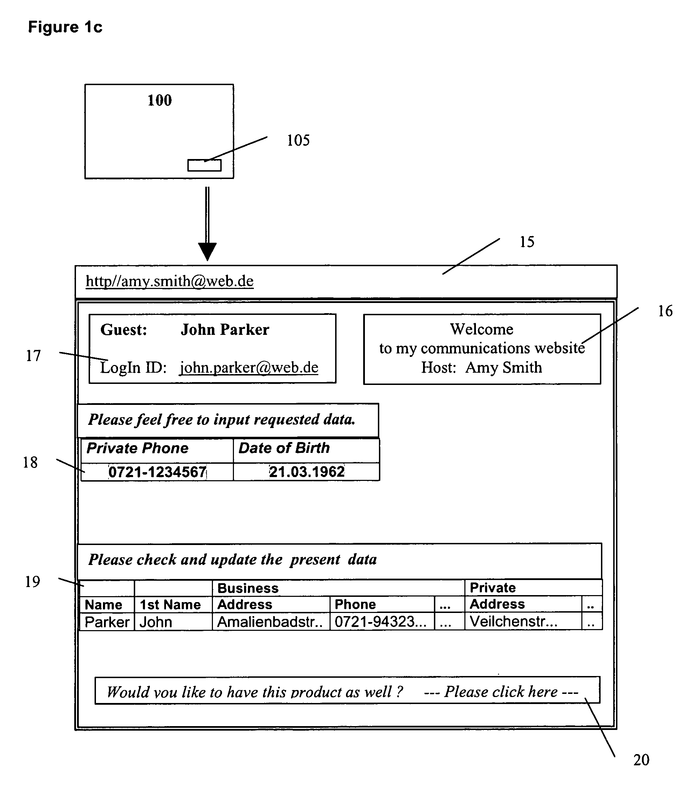

Fig. 1a shows a message 100 with an integrated footer 101 according to the present invention. The message 100 is an e-mail message, which has been opened from within an e-mail program such as Microsoft Outlook®.

The e-mail stems from the sender 104 (Amy Smith) and has been sent to the recipient 103 (John Parker). As in any standard e-mail there is a body 106 containing the actual message that has been sent by Amy to John. Furthermore at the bottom, the e-mail 100 has a supplementary section called footer 101. This may be displayed in form of a box or window 101 or any other form. It is to be noted that the footer 101 need not be below the text body 106, but may be located somewhere else within the message 100.

The e-mail footer 101 may contain the business card information 110 of the sender, i.e. of Amy Smith, which is well-known in the art. In addition to this and according to the invention the footer 101 also comprises contact information 109 that the sender 104 of the e-mail 100, i.e. Amy, has about the recipient 103, i.e. John Parker. As it can be seen from box 102, Amy's contact database knows already John's postal addresses (business and private address). Amy's database further knows John's business and mobile phone numbers and also his e-mail addresses (business and private).

However, as it is shown by the question marks 107, Amy's database does not yet know John Parker's private phone number and his date of birth. Thus John is requested to give these contact information to Amy.

Therefore the footer 101 also contains a button 105, which allows John to start an application or program to edit or update his contact information 109 contained in box 102. The button 105 represents a link to an URL of a communications website which is assigned to the sender (Amy).

By referring also to Fig. 1c this process shall now be explained in more detail:

When the recipient (John) is clicking on the button 105 the browser on his PC starts to visit the linked URL which leads to Amy's communications website 15. In this example the URL may have the string format http://amy.smith@web.de. Of course any other appropriate format may be applied. As can be seen from box 16 this website is assigned to Amy and provides centralized comfort control and management of communications of all types to any contact. The recipient John is automatically logged-on that website 15. There he will be invited to edit or update contact information, e.g. to fill in the private phone number and his date of birth. This may be realized by a fill-in box 18. The recipient John is further ask to check the already known data and to update them if necessary. Therefore another box or table 19 is displayed.

This comfort service and communications website constitute a product which shall also be offered to the recipients, i.e. in this case to John. Therefore a button 20 is also presented to invite him to order this product by just clicking the button 20. If he does so he will be forwarded to a linked webpage having an prepared online order-form wherein all kwon data such as John's name, address, phone number and date of birth is already filled-in. Thus John only needs to complete the form and confirm the order.

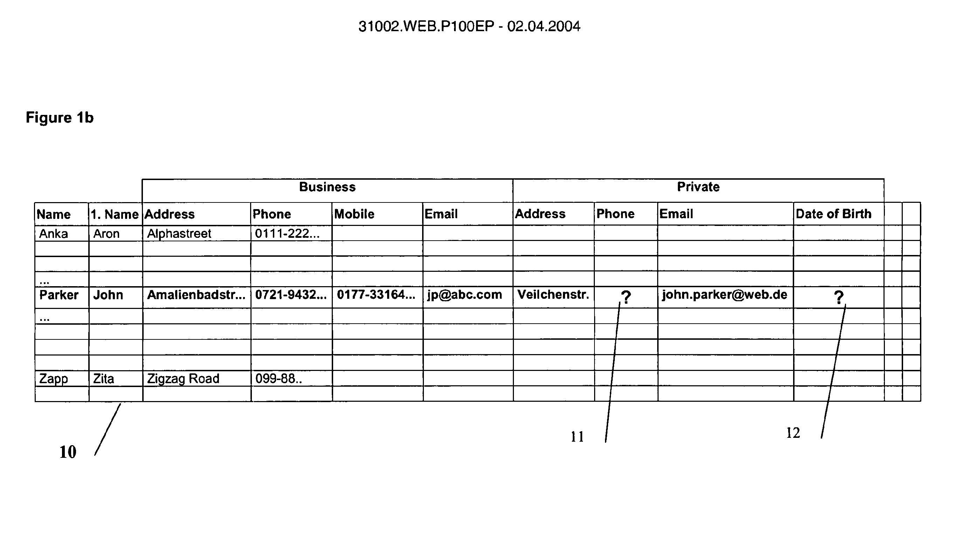

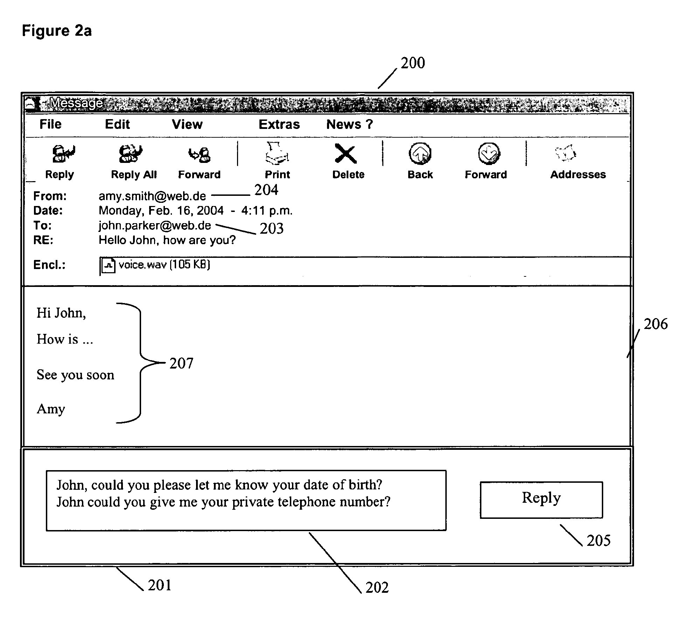

Now the Fig. 2a shows a second embodiment of the present invention. This embodiment is similar to the first embodiment shown in fig. 1 except for the fact that the integrated footer 201 does not show the contact information that is available about the recipient but rather contains an information request 202. In the example shown, the sender 204 (Amy Smith) has sent an e-mail message 200 to the recipient 203 (John Parker). The message 200 has a standard body 206 containing a message 207 that Amy wants to transmit to John. Furthermore, the integrated footer 201 contains two questions that Amy would like to have answered by John. As shown in the example, Amy would like to know John's date of birth as well as his private telephone number. John is able to reply to Amy's queries by using the reply button 205 that is integrated into the footer 201. By clicking the button 205 a reply e-mail will appear in which John may enter the requested data and then sent this e-mail to Amy. Preferably the reply e-mail is sent to Amy's website database and the new and updated data are stored there automatically.

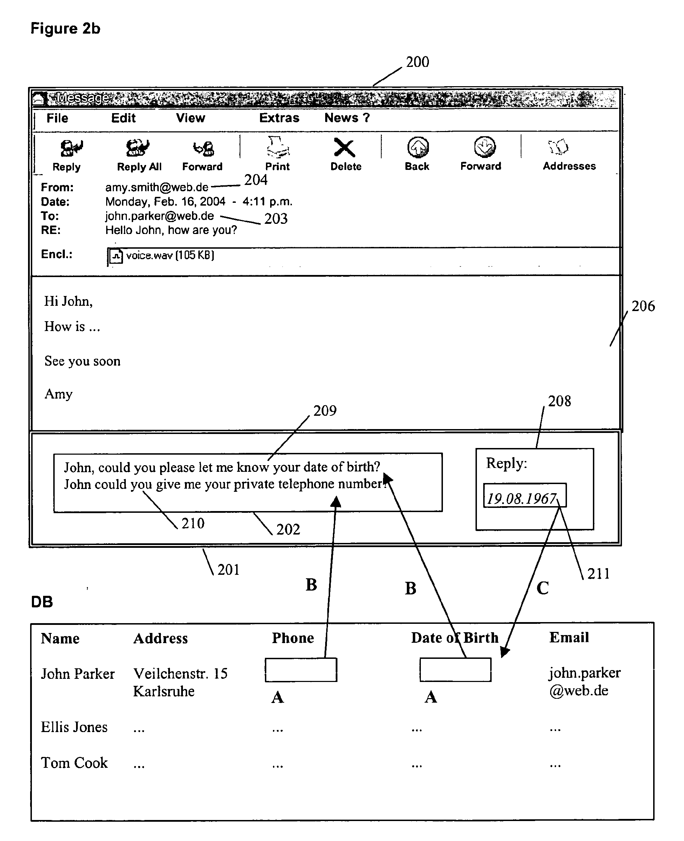

Fig. 2b details the method by which Amy is able to send queries to John using the footer 201 and by which John can reply to Amy.

The procedure is exemplified by letters A to C. As shown by fig. 2b, Amy's database DB does not contain John Parker's telephone number nor his date of birth (cf. letter A). Accordingly, Amy's database DB automatically generates two adequate queries 209 and 210, which are automatically integrated into the footer 201 of the next message that is to be sent to John (cf. arrow B). It is to be noted that the queries 209, 210 need not be generated automatically by the contact database. The queries 209 and 210 may also be generated by the sender 204 himself.

Once John has received the e-mail message 200 from Amy, he may reply to the questions 209 and 210 contained in the footer 201 by pressing the reply button 205 (cf. fig. 2a). If John decides to do so, then a window 208 opens within the footer 201. John is then able to type in his reply to the questions 209 and 210. In the shown example in fig. 2b John has typed in his date of birth 211. Of course, a different reply means instead of the reply button 205 and the reply window 208 may be provided as well.

The information that John has entered into the window 208 is then automatically returned to the database DB as shown by arrow C. Of course, John may also return this information by himself, e.g. by again pressing the reply button 205.

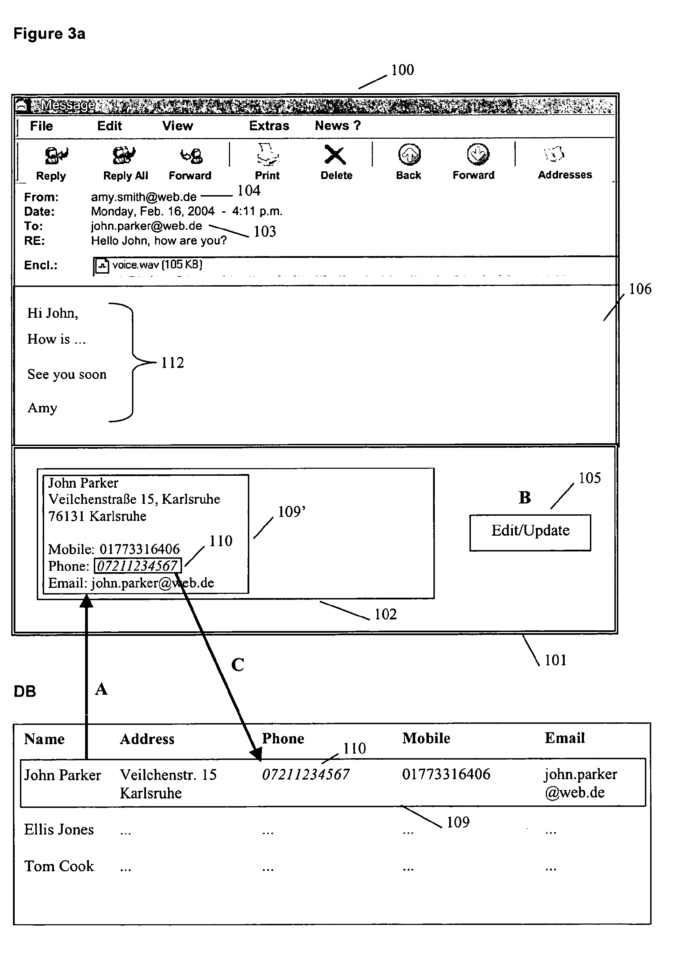

The method shown in fig. 2b is a more assertive way of obtaining contact and private information from a recipient as compared with the method as shown in fig. 3a. In fig. 2b, the footer 201 contains real questions addressed to the recipient whereas with the contact information as displayed in fig. 3a the recipient is merely hinted to the fact that the sender may lack some information about him or that some of the information may be out of date.

With the help of fig. 3a, it will now be shown a further example of how Amy can update her contact information about John by using the integrated footer 101. When Amy sends her e-mail message 100 to John, Amy's contact database DB automatically integrates the contact information 109 that is available about John into the e-mail footer 101. Preferably, the contact database DB is a database, which is associated to the e-mail application that Amy uses to write e-mails.

The process of updating contact information is shown by the letters A to C. Firstly, when Amy generates a new e-mail message to John, the database DB automatically integrates the contact information 109 available about John Parker into the integrated footer 101 (as shown by arrow A). Then, once Amy has finished to write her message 112 to John in the text box 106, Amy sends her message with the integrated footer 101 to John. Next, when John opens Amy's message 100, he can both read Amy's actual message text 106 and also his contact information 109 contained in the footer 101. In the present example, as shown by the input field 110, Amy's contact information about John is not complete. Indeed, Amy is lacking John's standard telephone number. When John reads the message 100 he will immediately see that his contact information 109 lacks his telephone number 110 "07211234567".

In order to let Amy know about his telephone number to be inserted into field 110, John can press the button 105 as shown by letter B. When John presses the button 105, a cursor appears in box 102, in particular in the field 110 that lets John enter there his telephone number. Of course, different means may be provided by which John may enter the missing contact information. This means may be for example a separate pop up window or the like.

As soon as John has entered his telephone number this information is automatically returned to Amy's database DB as shown by arrow C. This feature is most easily implemented if the e-mail message sent by Amy is an HTML e-mail. If no automatic update return is provided, John may return the updated information 109' to Amy by himself, e.g. by again pressing the button 105.

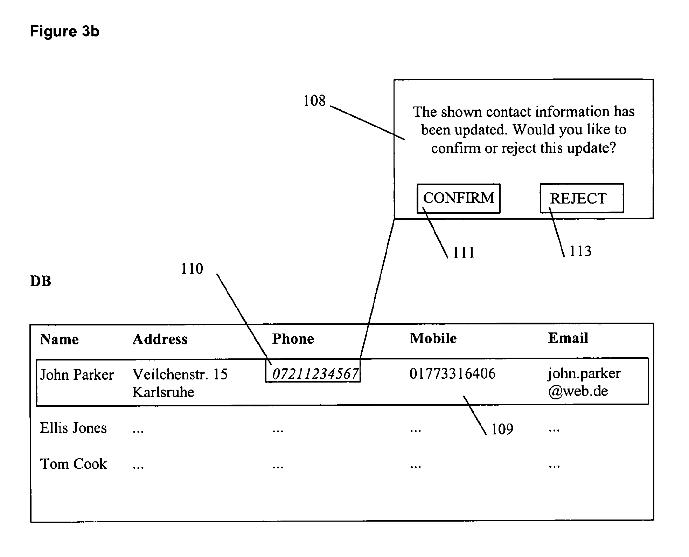

Fig. 3b shows how Amy's database DB may react when it receives John's update. When the telephone number 110 is received, it is integrated into the database DB. However, before it permanently stores the telephone number 110, the database DB first asks for confirmation in the form of a confirmation window 108. Amy then has to decide whether to keep John's new telephone number 110 by pressing the confirmation button 111, or whether she wants to reject the update by pressing the "Reject"-button 113. Of course, the database's confirmation request may as well be issued in a different form.

It is to be noted that by default every e-mail sent by Amy has a footer 101 with recipient's contact information 109. However, Amy may select by herself, which of her e-mails should contain such an integrated footer 101.

An advantage of the method as described by fig. 3a is that the recipient 103 of the message 100 need not react immediately to the possibly incomplete contact information 109. Indeed, since this contact information 109 is by default attached to every e-mail, which is sent, the recipient 103 might also decide to update his information in the footer of a later e-mail. Furthermore, since the contact information 109 is merely attached to an otherwise normal e-mail message with an unrelated main message 112, the recipient is prompted in a more subtle way to update his information then if he would get separate update request e-mail with the sole purpose of obtaining up to date contact information. The described message 100 is an effective way of obtaining contact information updates with a minimal risk of annoying the addressees of the update request.

The main advantage of the described methods is that in all cases the sender's requests are merely riding piggyback on an unrelated main message. Consequently, the requests are only perceived as marginal by the recipients. The recipient is thus unlikely to feel disturbed or annoyed by the requests and on top of that may also choose by himself if and when to reply to the requests.

### References

- 10: Database Table
- 11, 12: Question marks for blank data fields
- 15: Communications website
- 16, 17: Host, Guest data field
- 18: Input data field
- 19: Table with present data
- 20: Button with link to product order form
- 100, 200: E-mail message
- 101, 201: Integrated footer
- 103, 203: Recipient
- 104, 204: Sender
- 105, 205: Button
- 106, 206: Body
- 102: Footer Text Box
- 107: Question Mark
- 108: Confirmation window
- 109: Contact information
- 109': Updated contact information
- 110: Telephone number
- 111: Confirmation button
- 112: Text message
- 113: Reject-button
- 202: Information requests
- 207: Text message
- 208: Reply window
- 209, 210: Questions
- 211: Reply
- DB: Database

## Claims

1. A messaging system processing, in particular generating, messages (100), especially e-mail messages, with an integrated footer (101) for transmission from a sender (104) to a recipient (103), **characterised in that** the integrated footer (101) comprises contact information (109) about the message recipient (103).

2. A messaging system as defined in claim 1, **characterised in that** said contact information (109) about the recipient is editable, especially updatable, by the recipient (103).

3. A messaging system as defined in one of claim 1 or 2, **characterised in that** said contact information (109) comprises fields with present information to be checked and updated and fields with no information, but with signs or characters (107) for requesting information to be inputted.

4. A messaging system as defined in one of claims 1 to 3, **characterised in that** said footer (101) contains an element (105) to link the recipient to a communications website (15) which is assigned to the sender and to let the recipient edit or update the contact information on said website (15), in particular on a webpage having at least one input data field (18).

5. A messaging system as defined in claim 4, **characterised in that** said webpage contains also data fields, in particular a table with data field, presenting the present information to be checked and updated by the recipient.

6. A messaging system or a method according to one of the preceding claims, **characterised in that** said messages (100, 200) are electronic messages such as Email messages, HTML-Email messages or MMS messages.

7. A messaging system as defined in one of claims 1 to 3, **characterised in that** the footer (201) comprises questions or requests (202) to ask the recipient for information and an element, in particular a reply button (205), to send back a reply message from the recipient to the sender.

8. A communications environment comprising a messaging system according to one of the preceding claims.

9. A method for presenting a message recipient (203) with a request for information (202) from a sender's database (DB) comprising the steps of:
- detecting a given setting or input within said database (DB);
- integrating a corresponding information request (202) into an integrated footer (201) of a message (200) directed towards the recipient (203).
